(19)

Europäisches
Patentamt
European
Patent Office
Office européen
des brevets

(11) **EP 1 756 528 B1**

(12) **EUROPEAN PATENT SPECIFICATION**

(45) Date of publication and mention
of the grant of the patent:
**29.08.2012 Bulletin 2012/35**

(21) Application number: **04729089.5**

(22) Date of filing: **23.04.2004**

(51) Int Cl.:
***G01D 5/48*** (2006.01)

(86) International application number:
**PCT/EP2004/004343**

(87) International publication number:
**WO 2005/103628 (03.11.2005 Gazette 2005/44)**

(54) **POSITION DETERMINATION DEVICE AND METHOD OF POSITION DETERMINATION**

POSITIONSBESTIMMUNGSEINRICHTUNG UND VERFAHREN ZUR POSITIONSBESTIMMUNG

DISPOSITIF DE DETERMINATION DE POSITION ET PROCEDE CORRESPONDANT

(84) Designated Contracting States:
**AT BE BG CH CY CZ DE DK EE ES FI FR GB GR
HU IE IT LI LU MC NL PL PT RO SE SI SK TR**

(43) Date of publication of application:
**28.02.2007 Bulletin 2007/09**

(60) Divisional application:
**10011342.2 / 2 270 436**

(73) Proprietor: **Cameron International Corporation
Houston, TX 77027 (US)**

(72) Inventors:
• **KUNOW, Peter
12355 Berlin (DE)**

• **BIESTER, Klaus
29227 Celle (DE)**

(74) Representative: **Akers, Noel James
N.J. Akers & Co
63 Lemon Street
Truro, TR1 2PN (GB)**

(56) References cited:
**DE-A- 4 334 811    DE-A- 10 108 925
US-A- 4 071 818    US-A- 5 274 328
US-A- 5 717 330**

**Description**

The invention relates to a position determination device and an associated method of position determination.

The device and method are used to determine the position of a body, in particular a spindle of a screw drive, which is employed in an actuator in the production of mineral oil or natural gas. This type of actuator is used, for example, in the adjustment and actuation of blowout preventers, valves, throttles and similar equipment. The relevant screw drive is driven by at least one electric motor and the relative position between the spindle and the associated spindle nut is determined in order to infer a corresponding position of the element operated by the actuator.

From DE 20 203 298, for example, an appropriate position determination device is known in which a bar code is arranged on an element and a corresponding scanning device is arranged on another element which move relative to one another. The appropriate bar code is here specific to position so that by reading out the bar code the relative position of both elements with respect to one another can be found.

The previously known sensor operates quite satisfactorily. However, the bar code has to be specially manufactured and the associated scanning device is sometimes not easy to integrate into the appropriate body, such as the spindle or similar component, of an actuator. In addition, the previously known sensor is partially sensitive to external influences, such as variations in the pressure or temperature.

US 5,274,328 is concerned with temperature compensation for a magnetostrictive position detector and discloses a position detection probe having a magnetostrictive wire stretched between a head and a reflective foot end termination. A magnet is displaceable along the probe.

The object of the invention is to improve a position determination device and an associated method such that external influences are largely negligible during the simple, accurate and reproducible determination of a position. At the same time the said device is simply constructed and can be easily integrated in the actuators mentioned above or in similar equipment.

According to the present invention, there is provided a position determination device as recited in claim 1 appended hereto.

In a further aspect, the present invention provides a method for position determination of a first body moving relative to a second body as recited in claim 24 appended hereto.

According to the invention, a deformation element is assigned to one of the moving bodies and a deformation initiation element to the other body. These elements move relative to one another analogous to the bodies. In the deformation element a deformation is briefly induced at an initiation point where the deformation initiation element is currently located. Then, a propagation time of at least one oscillation caused by the deformation and propagating along the deformation element is measured by a suitable deformation sensor. From the propagation time, the distance between the initiation point and measuring point is calculated for the corresponding position determination.

With the said position determination device a deformation element extends along a body movement section in which the corresponding movable body moves essentially linearly. A deformation initiation element is movable relative to the deformation element.

A deformation sensor is particularly assigned to a measurement end of the deformation element. Finally, an evaluation unit is provided for the position determination from a propagation time required from the deformation of the deformation initiation element to the deformation sensor.

According to the invention, no special bar codes or similar features are needed which have to be manufactured separately. It is also no longer necessary for the said sensor to move corresponding to changes of the position to be determined along the corresponding position-specific pattern. Instead of this, according to the invention, a determination of the position at a fixed point can be carried out, whereby the different positions are given by propagation times of the corresponding induced deformation. Consequently, the position determination device according to the invention is simply constructed and fewer parts need to be manufactured with the appropriate accuracy and moved relative to one another. The said sensor can be accommodated at a secure point where it is protected from damage or dirt. In addition the type of position determination, according to the invention, and the device used for it are relatively insensitive with respect to external influences such as pressure, temperature, temperature changes or similar effects or corresponding dependencies can at least be compensated in a simple manner.

The initiation and the propagation of the deformation can furthermore be simplified in that the deformation element is a coil or a winding of a series of single windings. The single windings here can be aligned at an appropriate angle so that this angle enables the stiffness of the deformation element to be varied. Depending on the desired stiffness, an appropriate winding angle is then selected.

It is conceivable that the appropriate deformation is initiated mechanically in that, for example, a mechanical deformation at an appropriate point on the deformation element occurs. This mechanical deformation can propagate along the deformation element and is acquired at an appropriate point by the deformation sensor. The deformation can however also be initiated in other ways, such as for example, by magnetic forces. For this purpose, the deformation initiation element may be a magnetic ring surrounding the deformation element.

With this type of magnetic ring, or a magnetic body which only partially surrounds the deformation element, there is the possibility that it produces a deforming magnetic field by means of one or more appropriate windings. However, the deformation initiation element may also be a permanent magnet and especially a permanently magnetic ring. Examples of appropriate permanent magnets are especially those which contain neodymium. These magnets have a particularly strong magnetic field so that appropriate deformations can be initiated in an appropriate material of the deformation element by even a small magnet. Due to the appropriately strong magnetic field or the high energy density of this type of magnetic material, the rings can have suitably small dimensions, whereby the position determination can take place more accurately.

To produce an appropriate opposing magnetic field, which can produce a deformation of the deformation element through interaction with the magnetic field of the magnetic ring, at least one electrical winding can be arranged around the deformation element and extend in the direction of the movement of the body. Due to the appropriate winding, a magnetic field is produced with the application of a voltage or a current, the said magnetic field interacting with the magnetic field of the permanent magnet and causing a deformation of the deformation element due to the corresponding attraction or repulsion. This deformation then propagates from the point of the deformation initiation along the deformation element and the propagation time from the release or initiation point to the deformation sensor is measured and then converted into a corresponding relative position of the deformation element and deformation initiation element. The winding can be fitted directly on the deformation element and attached there. The winding can also be arranged spaced from the deformation element so that no mechanical contact is present and therefore mechanical decoupling is provided. If a coil or a winding of a number of single windings is used as the deformation element, then an additional winding for the production of the opposing magnetic field can be omitted.

It has already been pointed out above that the appropriate body, the position of which is to be determined, may be, for example, a spindle of a spindle drive of an actuator. The spindle here moves relative to an appropriate spindle nut and the relative position of both is determined. There is now the possibility that, on one hand, the deformation element is fixed and the deformation initiation element together with the body, i.e. in this case the spindle, moves. On the other hand, the deformation initiation element can also be fixed, whereby then the deformation element moves together with the body.

If the mentioned body is particularly a spindle of a spindle drive, it can exhibit a retaining hole extending in the longitudinal direction of the spindle for the displaceable mounting of the, at least partially, inserted deformation element. In this case the deformation initiation element is integrated into the spindle and, for example, mounted, in particular releasably, at one of its ends. Of course, the deformation initiation element can also be integrated into the spindle at another location.

In order to be able to better protect the deformation element, it can be enclosed in a protective sleeve.

In order to enable the redundant determination of the position, at least two deformation elements can be inserted into one another, whereby appropriate deformations can be initiated in each of these deformation elements by especially only one deformation initiation element. A corresponding deformation sensor can be assigned to each of the deformation elements. The assignment can take place at different points for each of the deformation elements.

A redundant version of the position determination device can also be realised in that at least two deformation elements are arranged adjacently. Also in this case, two deformation elements can be contained in one protective sleeve and the corresponding deformations of each deformation element can be initiated by one deformation initiation element.

It may be convenient, according to the invention, if the deformation can be converted into a sound wave propagating along the deformation element, in particular longitudinally. The sound wave is a mechanical vibration which propagates from the centre of excitation at which the deformation is initiated and exhibits a corresponding elongation and propagation speed. The sound wave can propagate here as a longitudinal wave, whereby appropriate small particles of the deformation element oscillate in the propagation direction. There is also the possibility that sound waves in the form of transverse or torsion waves arise.

From the centre of excitation appropriate oscillations propagate as sound waves in both directions along the deformation element. It is possible that a further deformation sensor is assigned to the other end opposite the measuring end of the deformation element in order to determine the propagation times of the corresponding sound waves by the deformation sensors assigned to the relevant ends. The sensors are in this connection, for example, temporally synchronised by the time point of the initiation of the deformation. There is also the possibility that sound waves with appropriate propagation times can be acquired directly and reflected from the reflection end of the deformation element remote from the deformation sensor. This means that not only is the sound wave propagating directly from the centre of excitation in the direction of the deformation sensor acquired, but rather the sound wave that propagates first in the direction of the reflecting end where it is reflected and then along the deformation element in the direction of the deformation sensor.

In order to especially briefly initiate a deformation in the deformation element, the electrical winding of the deformation element can be supplied with current and/or voltage pulses. This type of pulse results briefly in a magnetic field which interacts with the magnetic field of the electromagnetic ring at the excitation point, causing a deformation.

Depending on the interaction of the magnetic fields, this can be caused by attraction or repulsion, so that either the deformation element is displaced in the direction of the permanently magnetised ring or compressed in the opposite direction.

This corresponding displacement then continues as a sound wave along the deformation element.

There is also the possibility that the corresponding pulses exhibit alternating arithmetic signs so that displacements in the direction of the magnetic ring and in the opposite direction alternate with one another.

In a preferred embodiment the deformation sensor can be a sensor with a piezoelectric element. This type of sensor comprises a piezo-ceramic which produces a voltage when an appropriate sound wave occurs. A simple arrangement of an appropriate sensor of piezo-ceramic can be provided when it is arranged at one end of the deformation element such that the propagation direction of the sound wave occurs perpendicular to a corresponding surface of the sensor.

In order to support the deformation element and, where applicable, also the protective sleeve, in particular with thin-walled material and to protect against bending, they can be inserted into or plugged onto a holding bushing with their reflection end remote from the deformation sensor.

Furthermore, the holding bushing can also exhibit a plug-on section for particularly sealed plugging of one end of the protective sleeve and an end section formed with a larger diameter in comparison to the diameter of the plug-on section. The end section is used for guiding the deformation element in the protective sleeve within the retaining hole of the spindle. On the end of the plug-on section opposite the end section the deformation element or elements are inserted with their reflection ends into appropriate ring-shaped receptacles.

In order to also hold the deformation element and protective sleeve securely opposite the holding bushing, a retaining end sleeve is arranged in which the deformation element, protective sleeve and deformation sensor are arranged, especially sealed. The deformation element or elements and the protective sleeve are inserted with their ends into the retaining end sleeve and a deformation sensor is assigned to each of the corresponding measurement ends of the deformation element or elements.

In order to protect the deformation sensor as well as the windings from especially external influences in the region of the measurement end, at least the measurement end and the associated deformation sensor are potted within the retaining end sleeve. A suitable material for potting is, for example, epoxy resin or a similar compound.

With this potting, in order to also protect the electrical connections to cables in this region, electrical cables for the electrical winding and the deformation sensor can be brought out of the retaining end sleeve.

In the following, advantageous embodiments of the invention are explained in more detail based on the figures enclosed in the drawing.

The following are shown:

Figure 1    a side sectional view of an embodiment of the position determination device according to the invention;

Figure 2    a partial view of a second embodiment of a position determination device analogous to Figure 1;

Figure 3    a partial view of a third embodiment of a position determination device analogous to Figure 1, and

Figure 4    a schematic illustration of the position determination device for explaining the measurement principle.

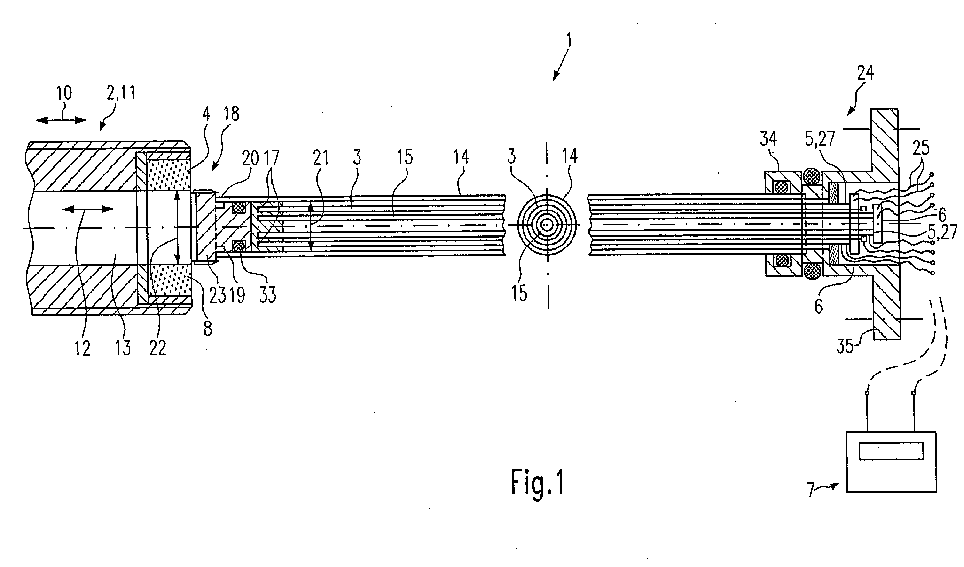

Figure 1 shows a side view of a longitudinal section through a first embodiment of a position determination device 1 according to the invention. This said device exhibits at least one deformation element 3 and a deformation initiation element 4 which are movable relative to one another in the body movement directions 10. The deformation initiation element 4 is formed as a magnetic ring 8 which is inserted into one end of a body 2. In the illustrated embodiment, this body 2 is a spindle 11. In the longitudinal direction 12 of the spindle, this spindle exhibits a retaining hole 13 in which the deformation element or elements 3 and 15 are supported for displacement and are at least partially inserted.

For better clarity, in Figure 1 the deformation element 3, 15 is completely withdrawn from the retaining hole 13.

The spindle 11 is partially illustrated and, together with a spindle nut which is not shown, forms a screw drive for an actuator in the field of mineral oil and natural gas production.

These types of actuators are used for the adjustment of valves, blowout preventers, throttles or similar equipment. For example, in the case of a valve the spindle 11 can be connected for movement to an appropriate valve element which controls a flow of mineral oil through a pipe.

The magnetic ring 8 as deformation initiation element 4 is formed from a permanent magnetic material which, for example, contains neodymium and exhibits a high magnetic field strength and a high energy density.

The deformation element 3 is inserted with its reflection end 17 into an essentially ring-shaped retaining groove in one end of a holding bushing 18. Analogously, a corresponding reflection end 17 of another deformation element 15 is also inserted into an annular groove in this holding bushing 18. In the region of these annular grooves and also adjacent to it, the holding bushing 18 is formed with a diameter 21 which essentially corresponds to an internal diameter of a protective sleeve 14. In this protective sleeve 14 both deformation elements 3 and 15 are arranged plugged into one another, see also the lateral cross-sectional view shown in the centre in Figure 1.

The region of the holding bushing 18 with diameter 21 is formed as a plug-on section 19 onto which one end 20 of the protective sleeve 14 is plugged in a sealed manner. Sealing can be provided in particular by an O-ring 33. Adjacent on the plug-on section 19, an end section 23 is arranged, which, in comparison to the diameter 21, exhibits a larger diameter 22. Consequently, a step is produced between the plug-on section 19 and the end section 23, the said step acting as a support surface for the end 20 of the protective sleeve 14. The diameter 22 of the end section 23 corresponds approximately to an internal diameter of the retaining hole 13.

Opposite the reflection end 17 each deformation element 3, 15 exhibits a measurement end 5. A deformation sensor 6 is assigned to each of these said ends. The deformation sensor 6 of the outer deformation element 3 is formed ring-shaped and surrounds the inner deformation element 15 which is passed through its annular opening. On its measurement end the other deformation sensor 6 is arranged with an essentially circular shape. Also, the protective sleeve 14 is inserted up to the retention sleeve 24 and is sealed there using another O-ring 34. On its end remote from the protective sleeve 14, the retaining end sleeve 24 exhibits an annular flange 35 for releasable mounting. The corresponding measurement ends 5 of the deformation elements 3, 15 and the associated deformation sensors 6 are potted for sealing within the retaining end sleeve 24 by, for example, epoxy resin.

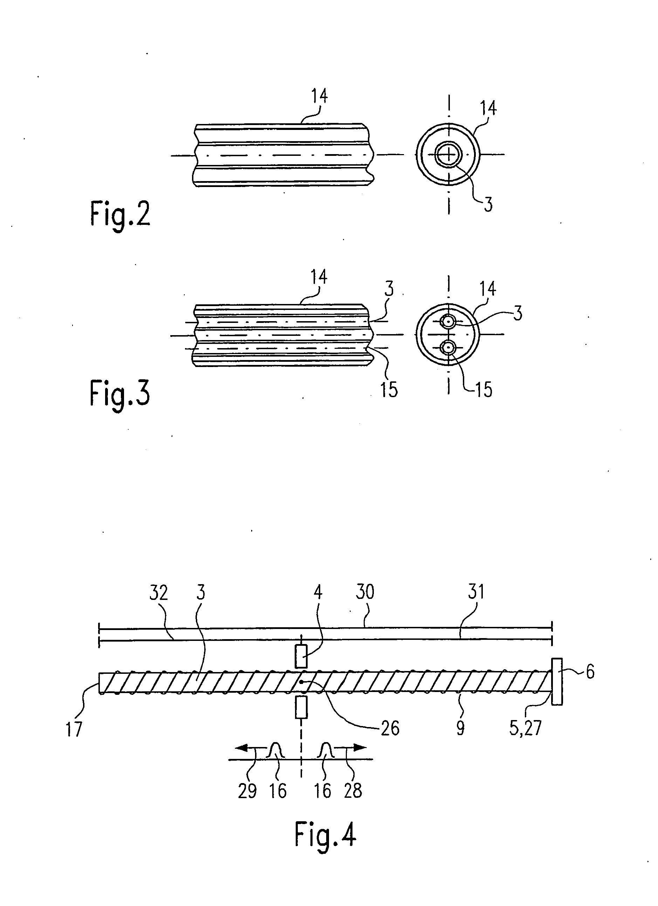

Electrical cables 25 are routed to the windings 9, see Figure 4, as well as to the deformation sensors 6 and are connected at the other end to an evaluation unit 7 which is only illustrated schematically.

The retaining end sleeve 24 is fixed with its annular flange 35, for example, within an appropriate actuator relative to the spindle 11 as a movable body 2 so that the deformation initiation element 4 moves along the deformation element 3 together with the body 2. Consequently, depending on the position of the body 2 and therefore of the deformation initiation element 4, a deformation of the corresponding deformation element 3, 15 is initiated at different initiation points or centres of excitation 26, see Figure 4, the said deformation then propagating, particularly as a longitudinal sound wave 16, along the deformation element and being detected at the measurement end 5 as measuring point 27 by the corresponding deformation sensors 6. From the propagation time of the sound wave, arising due to the time difference between the initiation of the deformation and the detection by the deformation sensor, the position of the deformation initiation element 4 and therefore of the body 2 is determined relative to the deformation element 3.

In Figures 2 and 3 further embodiments of a position determination device 1 according to the invention are illustrated. They differ from the embodiment according to Figure 1 in the number and/or arrangement of the deformation elements 3.

With the embodiment according to Figure 2, a deformation element 3 is arranged within the protective sleeve 14, whereby both are arranged concentrically with respect to one another.

In the embodiment according to Figure 3 two deformation elements 3, 15 are arranged adjacently and spaced from one another within the protective sleeve 14.

With the embodiments according to Figures 1 and 3, the position determination device is constructed redundantly, because two measurement values are determined in each case for the corresponding position. The other features of the embodiments according to Figures 2 and 3 correspond to those according to Figure 1. Here, it should be noted that in the embodiments according to Figures 2 and 3 in each case approximately circular-shaped deformation sensors 6 are arranged on the corresponding measurement ends of the deformation elements 3.

Figure 4 shows a schematic illustration of the position determination device for explaining the measurement principle.

In this figure the electrical winding 9 on the deformation element 3 can in particular be seen, the said winding having been omitted for simplification in Figures 1 to 3. With this electrical winding the corresponding electrical cables 25 are connected according to Figure 1. Other cables are connected to the deformation sensor 6. The deformation initiation element 4 is arranged at an appropriate initiation point 26 for a deformation which is arranged at a distance 31 from the measuring point 27 of the deformation sensor 6 and at a distance 32 from the reflection end 17 of the deformation element 3. The total length 30 of the deformation element 3 corresponds to the sum of the corresponding distances 31 and 32.

Due to an appropriate current or voltage pulse which is passed to the electrical winding 9, a magnetic interaction of the magnetic field produced by the electrical winding 9 with the magnetic field of the magnetic ring of the deformation initiation element 4 occurs. Due to this interaction a brief displacement of the deformation element 3 arises, which after the end of the magnetic interaction propagates along the deformation element 3, especially as a longitudinal sound wave 16. Here, a sound wave, propagating directly in the direction of the deformation sensor 6 arises due to the deformation as well as a sound wave propagating in the direction of the reflection end 17, which only reaches the deformation sensor 6 at a later time point after reflection at the reflection end. The propagation times in each case for the sound waves are determined and are used to find the position of the deformation initiation element 4, employing the principle according to the following equations:

$$s_1 = c_L * t_1 \qquad\qquad (1),$$

$$s_2 = c_L * t_2 \qquad\qquad (2),$$

where $s_1$ corresponds to the distance 32 and $s_2$ to the distance 31 according to Figure 4 with $t_1$ and $t_2$ being the corresponding propagation times and $c_L$ is the speed of sound for a longitudinal sound wave.

The total length 30 of the deformation element 3 can be represented by the sum of equations (1) and (2) as follows:

$$2l = s_1 + s_2 = c_L * t_1 + c_L * t_2 = c_L (t_1 + t_2) \qquad (3).$$

From equation (3) the speed of sound is given as follows:

$$c_L = 2l/(t_1 + t_2) \qquad\qquad (4).$$

By substituting equation (4) in equations (1) and (2) the said position of the deformation initiation element 4 relative to the reflection end 17 and to the measurement end 5 is given according to the following equations:

$$s_1 = 2l*t_1/(t_1 + t_2) \qquad\qquad (5),$$

and

$$s_2 = 2l*t_2/(t_1 + t_2) \qquad\qquad (6).$$

The speed of longitudinal sound waves, normally dependent on temperature, is eliminated in the position determination by measurements of the propagation time of the sound wave propagating directly in the direction of the measuring point 27 and of the sound wave first reflected, so that no temperature dependence is present in the said position determination. There is also the possibility of measuring the propagation times of both sound waves directly in that, for example, another deformation sensor 6 is assigned to the reflection end and the propagation time of the sound wave between the initiation point 26 and the reflection end 17 is measured. In this case the two sensors 6 are synchronised in time.

## Claims

1. Position determination device (1) for an essentially linear moving body (2, 11) with at least one deformation element (3, 15) extending along the range of body movement, a deformation initiation device (4, 8) movable relative to said deformation element, a deformation sensor (6) assigned to a measurement end (5) of the deformation element (3, 15) and an evaluation unit (7) for determining the position from a propagation time required from the deformation of the deformation initiation element to the deformation sensor;
   **characterised in that**
   the deformation element (3, 15) is formed as a coil or winding (9).

2. Position determination device according to Claim 1,
   **characterised in that**

the pitch of each winding is selected in relation to the stiffness of the deformation element (3).

3. Position determination device according to one of the previous claims,
**characterised in that**
the deformation initiation element (4) is a magnetic ring (8) surrounding the deformation element (3).

4. Position determination device according to one of the previous claims,
**characterised in that**
the deformation initiation element (4) is a permanently magnetic ring (8).

5. Position determination device according to one of the previous claims,
**characterised in that**
at least one electrical winding (9) is arranged around the deformation element (3) and extends in the direction of the body movement (10).

6. Position determination device according to claim 5,
**characterised in that**
the electrical winding is arranged spaced to the deformation element (3).

7. Position determination device according to one of the previous claims,
**characterised in that**
the deformation initiation element (4) is arranged on the body (2).

8. Position determination device according to one of the previous claims,
**characterised in that**
the body (2) is especially a spindle (11) of a screw drive and exhibits a retaining hole (13) extending in the longitudinal direction of the spindle (12) for the displaceable support of the, at least partially, inserted deformation element (3).

9. Position determination device according to one of the previous claims,
**characterised in that**
the deformation element (3) is surrounded by a protective sleeve (14).

10. Position determination device according to one of the previous claims,
**characterised in that**
at least two deformation elements (3, 15) are inserted one in the other.

11. Position determination device according to one of the previous claims,
**characterised in that**
at least two deformation elements (3, 15) are arranged adjacently.

12. Position determination device according to one of the previous claims,
**characterised in that**
the deformation can be converted into a sound wave (16), especially a longitudinal sound wave, propagating along the deformation element (3, 15).

13. Position determination device according to one of the previous claims,
**characterised in that**
another deformation sensor (6) is assigned to a reflection end (17) situated opposite the measurement end (5) of the deformation element (3, 15).

14. Position determination device according to one of the previous claims,
**characterised in that**
the sound waves (16) can be acquired with corresponding propagation times directly and reflected from the reflection end (17) of the deformation element (3) remote from the deformation sensor (6).

15. Position determination device according to either of claims 5 or 6,
**characterised in that**
the electrical winding (9) can be supplied with current and/or voltage pulses.

**16.** Position determination device according to claim 15,
**characterised in that**
the electrical winding (9) can be supplied with voltages with alternating arithmetic signs.

**17.** Position determination device according to one of the previous claims,
**characterised in that**
the deformation element (3) is inserted at its reflection end (17) remote from the deformation sensor (6) into a holding bushing (18).

**18.** Position determination device according to claim 17,
**characterised in that**
the holding bushing (18) exhibits a plug-on section (19) for especially sealed plugging of an end (20) of a protective sleeve (14) and an end section (23) formed with a diameter (22) larger in comparison to the diameter (21) of the plug-on section (19).

**19.** Position determination device according to one of the previous claims,
**characterised in that**
a retaining end sleeve (24) is arranged opposite the reflection end (17), the deformation element (3), a protective sleeve (14) and deformation sensor (6) being arranged, especially sealed, in the said retaining end sleeve.

**20.** Position determination device according to one of the previous claims,
**characterised in that**
the deformation sensor (6) is a piezoelectric element sensor.

**21.** Position determination device according to one of the previous claims,
**characterised in that**
at least the measurement end (5) and the associated deformation sensor (6) are potted within the retaining end sleeve (24).

**22.** Position determination device according to either of claims 5 or 6,
**characterised in that**
electrical cables (25) for the electrical winding (9) and the deformation sensor (6) are brought out from the retaining end sleeve (24) and connected to the evaluation unit.

**23.** Position determination device according to claim 22,
**characterised in that**
the electrical winding (9) is insulated electrically with respect to the deformation element (3).

**24.** Method for position determination of a first body (2), moving relative to a second body, especially a spindle and nut of a screw drive for actuators in the production of mineral oil and natural gas, whereby a deformation element (3) is assigned to one of the bodies and a deformation initiation element is assigned to the other body, the said elements moving relative to one another analogous to the bodies, with the following steps:

i) induction of a brief deformation in the deformation element (3) at an initiation point at which the deformation initiation element (4) is located;
ii) measurement of a propagation time of at least one oscillation caused by the deformation along the deformation element (3) at a measuring point of the deformation element (3) using a deformation sensor (6), and
iii) calculation of the distance between the initiation point (26) and the measuring point (27) from the propagation time for the position determination of the first body relative to the second body;

**characterised in that**
the deformation element (3) is formed as a coil or winding (9).

**25.** Method according to Claim 24,
**characterised by**
initiation of the deformation by magnetic interaction between the deformation element (3) and the deformation initiation element (4).

26. Method according to Claim 24 or 25,
**characterised by**
measurement of propagation times at least of an unreflected oscillation, propagating directly to the measuring point and a reflected oscillation, whereby the reflection occurs at a reflection end (17) of the deformation element (3) situated remotely from the measuring point (27).

27. Method according to one of the Claims 24 to 26,
**characterised by**
measurement of the propagation time at a measurement end (5) of the deformation element (3), situated opposite the reflection end (17) by the deformation sensor (6).

28. Method according to one of the Claims 24 to 27,
**characterised in that**
an especially longitudinal sound wave is measured as the oscillation.


**Patentansprüche**

1. Positionsbestimmungsvorrichtung (1) für einen sich im Wesentlichen linear bewegenden Körper (2, 11) mit wenigstens einem am Körperbewegungsbereich entlang verlaufenden Deformationselement (3, 15), einer Deformationsauslösevorrichtung (4, 8), die relativ zu dem genannten Deformationselement bewegbar ist, einem Deformationssensor (6), der einem Messende (5) des Deformationselements (3, 15) zugeordnet ist, und einer Auswertungseinheit (7) zur Positionsbestimmung aus einer von der Deformation des Deformationsauslöseelements bis zum Deformationssensor benötigten Laufzeit,
**dadurch gekennzeichnet, dass**
das Deformationselement (3, 15) als eine Spule oder Wicklung (9) ausgebildet ist.

2. Positionsbestimmungsvorrichtung nach Anspruch 1,
**dadurch gekennzeichnet, dass**
die Steigung jeder Wicklung in Bezug auf die Steifigkeit des Deformationselements (3) gewählt ist.

3. Positionsbestimmungsvorrichtung nach einem der vorhergehenden Ansprüche,
**dadurch gekennzeichnet, dass**
das Deformationsauslöseelement (4) ein das Deformationselement (3) umgebender magnetischer Ring (8) ist.

4. Positionsbestimmungsvorrichtung nach einem der vorhergehenden Ansprüche,
**dadurch gekennzeichnet, dass**
das Deformationsauslöseelement (4) ein permamentmagnetischer Ring (8) ist.

5. Positionsbestimmungsvorrichtung nach einem der vorhergehenden Ansprüche,
**dadurch gekennzeichnet, dass**
wenigstens eine elektrische Wicklung (9) um das Deformationselement (3) angeordnet ist und in der Körperbewegungsrichtung (10) verläuft.

6. Positionsbestimmungsvorrichtung nach Anspruch 5,
**dadurch gekennzeichnet, dass**
die elektrische Wicklung vom Deformationselement (3) beabstandet angeordnet ist.

7. Positionsbestimmungsvorrichtung nach einem der vorhergehenden Ansprüche,
**dadurch gekennzeichnet, dass**
das Deformationsauslöseelement (4) an dem Körper (2) angeordnet ist.

8. Positionsbestimmungsvorrichtung nach einem der vorhergehenden Ansprüche,
**dadurch gekennzeichnet, dass**
der Körper (2) speziell eine Spindel (11) eines Gewindetriebs ist und ein in der Längsrichtung der Spindel (12) verlaufendes Aufnahmeloch (13) zur verschiebbaren Lagerung des wenigstens teilweise eingesetzten Deformationselements (3) aufweist.

**9.** Positionsbestimmungsvorrichtung nach einem der vorhergehenden Ansprüche,
**dadurch gekennzeichnet, dass**
das Deformationselement (3) von einer Schutzhülse (14) umgeben ist.

**10.** Positionsbestimmungsvorrichtung nach einem der vorhergehenden Ansprüche,
**dadurch gekennzeichnet, dass**
wenigstens zwei Deformationselemente (3, 15) ineinander gesteckt sind.

**11.** Positionsbestimmungsvorrichtung nach einem der vorhergehenden Ansprüche,
**dadurch gekennzeichnet, dass**
wenigstens zwei Deformationselemente (3, 15) nebeneinander angeordnet sind.

**12.** Positionsbestimmungsvorrichtung nach einem der vorhergehenden Ansprüche,
**dadurch gekennzeichnet, dass**
die Deformation in eine Schallwelle (16) umgewandelt werden kann, speziell eine Längsschallwelle, die sich am Deformationselement (3, 15) entlang ausbreitet.

**13.** Positionsbestimmungsvorrichtung nach einem der vorhergehenden Ansprüche,
**dadurch gekennzeichnet, dass**
ein weiterer Deformationssensor (6) einem Reflektionsende (17) zugeordnet ist, das sich entgegengesetzt dem Messende (5) des Deformationselements (3, 15) befindet.

**14.** Positionsbestimmungsvorrichtung nach einem der vorhergehenden Ansprüche,
**dadurch gekennzeichnet, dass**
die Schallwellen (16) mit entsprechenden Laufzeiten direkt und von dem dem Deformationssensor (6) fernen Reflektionsende (17) des Deformationselements (3) reflektiert erfasst werden können.

**15.** Positionsbestimmungsvorrichtung nach Anspruch 5 oder 6,
**dadurch gekennzeichnet, dass**
die elektrische Wicklung (9) mit Strom- und/oder Spannungsimpulsen versorgt werden kann.

**16.** Positionsbestimmungsvorrichtung nach Anspruch 15,
**dadurch gekennzeichnet, dass**
die elektrische Wicklung (9) mit Spannungen abwechselnden Vorzeichens gespeist werden kann.

**17.** Positionsbestimmungsvorrichtung nach einem der vorhergehenden Ansprüche,
**dadurch gekennzeichnet, dass**
das Deformationselement (3) an seinem dem Deformationssensor (6) fernen Reflektionsende (17) in eine Aufnahmebuchse (18) eingesetzt ist.

**18.** Positionsbestimmungsvorrichtung nach Anspruch 17,
**dadurch gekennzeichnet, dass**
die Aufnahmebuchse (18) einen Aufsteckabschnitt (19) zum speziell abgedichteten Verstopfen eines Endes (20) einer Schutzhülse (14) und einen Endabschnitt (23), der mit einem Durchmesser (22) ausgebildet ist, der im Vergleich zu dem Durchmesser (21) des Aufsteckabschnitts (19) größer ist, aufweist.

**19.** Positionsbestimmungsvorrichtung nach einem der vorhergehenden Ansprüche,
**dadurch gekennzeichnet, dass**
eine Befestigungsendhülse (24) dem Reflektionsende (17) entgegengesetzt angeordnet ist, wobei das Deformationselement (3), die Schutzhülse (14) und der Deformationssensor (6) speziell abgedichtet in der genannten Befestigungsendhülse angeordnet sind.

**20.** Positionsbestimmungsvorrichtung nach einem der vorhergehenden Ansprüche,
**dadurch gekennzeichnet, dass**
der Deformationssensor (6) ein Sensor mit piezoelektrischem Element ist.

**21.** Positionsbestimmungsvorrichtung nach einem der vorhergehenden Ansprüche,
**dadurch gekennzeichnet, dass**

wenigstens das Messende (5) und der assoziierte Deformationssensor (6) in der Befestigungsendhülse (24) vergossen sind.

**22.** Positionsbestimmungsvorrichtung nach Anspruch 5 oder 6,
**dadurch gekennzeichnet, dass**
elektrische Kabel (25) für die elektrische Wicklung (9) und den Deformationssensor (6) aus der Befestigungsendhülse (24) herausgeführt und mit der Auswertungseinheit verbunden sind.

**23.** Positionsbestimmungsvorrichtung nach Anspruch 22,
**dadurch gekennzeichnet, dass**
die elektrische Wicklung (9) in Bezug auf das Deformationselement (3) elektrisch isoliert ist.

**24.** Verfahren zur Positionsbestimmung eines ersten Körpers (2), der sich relativ zu einem zweiten Körper, speziell Spindel und Mutter eines Gewindetriebs für Stellantriebe in der Produktion von Erdöl und Erdgas, bewegt, wobei einem der Körper ein Deformationselement (3) zugeordnet ist und dem anderen Körper ein Deformationsauslöseelement zugeordnet ist, wobei die genannten Elemente sich analog zu den Körpern relativ zueinander bewegen, mit den folgenden Schritten:

   i) Induzieren einer kurzfristigen Deformation im Deformationselement (3) an einem Auslösepunkt, an dem sich das Deformationsauslöseelement (4) befindet,
   ii) Messen einer Laufzeit von wenigstens einer durch die Deformation hervorgerufenen Schwingung entlang des Deformationselements (3) an einem Messpunkt des Deformationselements (3) unter Verwendung eines Deformationssensors (6) und
   iii) Berechnen des Abstands zwischen dem Auslösepunkt (26) und dem Messpunkt (27) aus der Laufzeit zur Positionsbestimmung des ersten Körpers relativ zu dem zweiten Körper,

   **dadurch gekennzeichnet, dass**
   das Deformationselement (3) als eine Spule oder Wicklung (9) ausgebildet ist.

**25.** Verfahren nach Anspruch 24,
**gekennzeichnet durch**
Auslösen der Deformation **durch** magnetische Wechselwirkung zwischen dem Deformationselement (3) und dem Deformationsauslöseelement (4).

**26.** Verfahren nach Anspruch 24 oder 25,
**gekennzeichnet durch**
Messen der Laufzeiten von wenigstens einer sich direkt zu dem Messpunktfortpfilanzenden unreflektierten Schwingung und einer reflektierten Schwingung, wobei die Reflektion an einem Reflektionsende (17) des Deformationselements (3) erfolgt, das sich von dem Messpunkt (27) entfernt befindet.

**27.** Verfahren nach einem der Ansprüche 24 bis 26,
**gekennzeichnet durch**
Messen der Laufzeit an einem Messende (5) des Deformationselements (3), das sich dem Reflektionsende (17) entgegengesetzt befindet, **durch** den Deformationssensor.

**28.** Verfahren nach einem der Ansprüche 24 bis 27,
**dadurch gekennzeichnet, dass**
als die Schwingung eine speziell longitudinale Schallwelle gemessen wird.

**Revendications**

**1.** Dispositif de détermination de position (1) pour un corps à déplacement essentiellement linéaire (2, 11) avec au moins un élément de déformation (3, 15) s'étendant le long de la plage de mouvement du corps, un dispositif d'initiation de déformation (4, 8) mobile par rapport audit élément de déformation, un capteur de déformation (6) affecté à une extrémité de mesure (5) de l'élément de déformation (3, 15) et une unité d'évaluation (7) pour déterminer la position à partir d'un temps de propagation requis à partir de la déformation de l'élément d'initiation de déformation au capteur de déformation ;

**caractérisé en ce que**
l'élément de déformation (3, 15) est formé comme une bobine ou un enroulement (9).

2. Dispositif de détermination de position selon la Revendication 1,
**caractérisé en ce que**
le pas de chaque enroulement est sélectionné par rapport à la rigidité de l'élément de déformation (3).

3. Dispositif de détermination de position selon l'une des revendications précédentes, **caractérisé en ce que**
l'élément d'initiation de déformation (4) est un anneau magnétique (8) entourant l'élément de déformation (3).

4. Dispositif de détermination de position selon l'une des revendications précédentes, **caractérisé en ce que**
l'élément d'initiation de déformation (4) est un anneau magnétique en permanence (8).

5. Dispositif de détermination de position selon l'une des revendications précédentes, **caractérisé en ce que**
au moins un enroulement électrique (9) est disposé autour de l'élément de déformation (3) et s'étend dans la direction du mouvement du corps (10).

6. Dispositif de détermination de position selon la revendication 5,
**caractérisé en ce que**
l'enroulement électrique est disposé de manière espacée par rapport à l'élément de déformation (3).

7. Dispositif de détermination de position selon l'une des revendications précédentes, **caractérisé en ce que**
l'élément d'initiation de déformation (4) est disposé sur le corps (2).

8. Dispositif de détermination de position selon l'une des revendications précédentes, **caractérisé en ce que**
le corps (2) est, en particulier, une broche (11) d'un entraînement à vis et présente un orifice de retenue (13) s'étendant dans la direction longitudinale de la broche (12) pour le support déplaçable de l'élément de déformation inséré au moins partiellement (3).

9. Dispositif de détermination de position selon l'une des revendications précédentes, **caractérisé en ce que**
l'élément de déformation (3) est entouré par un manchon protecteur (14).

10. Dispositif de détermination de position selon l'une des revendications précédentes, **caractérisé en ce que**
au moins deux éléments de déformation (3, 15) sont insérés l'un dans l'autre.

11. Dispositif de détermination de position selon l'une des revendications précédentes, **caractérisé en ce que**
au moins deux éléments de déformation (3, 15) sont disposés de manière adjacente.

12. Dispositif de détermination de position selon l'une des revendications précédentes, **caractérisé en ce que**
la déformation peut être convertie en une onde sonore (16), en particulier une onde sonore longitudinale, se propageant le long de l'élément de déformation (3, 15).

13. Dispositif de détermination de position selon l'une des revendications précédentes,
**caractérisé en ce que**
un autre capteur de déformation (6) est affecté à une extrémité de réflexion (17) située à l'opposé de l'extrémité de mesure (5) de l'élément de déformation (3, 15).

14. Dispositif de détermination de position selon l'une des revendications précédentes, **caractérisé en ce que**
les ondes sonores (16) peuvent être acquises avec des temps de propagation correspondants directement et réfléchies à partir de l'extrémité de réflexion (17) de l'élément de déformation (3) à distance du capteur de déformation (6).

15. Dispositif de détermination de position selon l'une ou l'autre des revendications 5 ou 6, **caractérisé en ce que**
l'enroulement électrique (9) peut être alimenté avec des impulsions de courant et/ou de tension.

16. Dispositif de détermination de position selon la revendication 15,
**caractérisé en ce que**
l'enroulement électrique (9) peut être alimenté avec des tensions avec des signes arithmétiques s'alternant.

**17.** Dispositif de détermination de position selon l'une des revendications précédentes, **caractérisé en ce que** l'élément de déformation (3) est inséré à son extrémité de réflexion (17) à distance du capteur de déformation (6) dans une douille de maintien (18).

**18.** Dispositif de détermination de position selon la revendication 17, **caractérisé en ce que** la douille de maintien (18) présente une section embrochable (19) pour le branchement en particulier scellé d'une extrémité (20) d'un manchon protecteur (14) et une section d'extrémité (23) formée avec un diamètre (22) plus grand par rapport au diamètre (21) de la section embrochable (19).

**19.** Dispositif de détermination de position selon l'une des revendications précédentes, **caractérisé en ce que** un manchon d'extrémité de retenue (24) est disposé à l'opposé de l'extrémité de réflexion (17), l'élément de déformation (3), un manchon protecteur (14) et le capteur de déformation (6) étant disposés, en particulier scellés, dans ledit manchon d'extrémité de retenue.

**20.** Dispositif de détermination de position selon l'une des revendications précédentes, **caractérisé en ce que** le capteur de déformation (6) est un capteur à élément piézoélectrique.

**21.** Dispositif de détermination de position selon l'une des revendications précédentes, **caractérisé en ce que** au moins l'extrémité de mesure (5) et le capteur de déformation associé (6) sont enrobés dans le manchon d'extrémité de retenue (24).

**22.** Dispositif de détermination de position selon l'une ou l'autre des revendications 5 ou 6, **caractérisé en ce que** des câbles électriques (25) pour l'enroulement électrique (9) et le capteur de déformation (6) sont amenés à partir du manchon d'extrémité de retenue (24) et connectés à l'unité d'évaluation.

**23.** Dispositif de détermination de position selon la revendication 22, **caractérisé en ce que** l'enroulement électrique (9) est isolé électriquement par rapport à l'élément de déformation (3).

**24.** Procédé pour la détermination de la position d'un premier corps (2), se déplaçant par rapport à un second corps, en particulier une broche et un écrou d'un entraînement à vis pour des actionneurs dans la production d'huile minérale et de gaz naturel, grâce à quoi un élément de déformation (3) est affecté à l'un des corps et un élément d'initiation de déformation est affecté à l'autre corps, lesdits éléments se déplaçant l'un par rapport à l'autre de manière analogue par rapport aux corps, avec les étapes suivantes :

i) induction d'une brève déformation dans l'élément de déformation (3) à un point d'initiation auquel l'élément d'initiation de déformation (4) est situé ;
ii) mesure d'un temps de propagation d'au moins une oscillation provoquée par la déformation le long de l'élément de déformation (3) à un point de mesure de l'élément de déformation (3) en utilisant un capteur de déformation (6), et
iii) calcul de la distance entre le point d'initiation (26) et le point de mesure (27) à partir du temps de propagation pour la détermination de la position du premier corps par rapport au second corps ;

**caractérisé en ce que**
l'élément de déformation (3) est formé comme une bobine ou un enroulement (9).

**25.** Procédé selon la Revendication 24, **caractérisé par** l'initiation de la déformation par interaction magnétique entre l'élément de déformation (3) et l'élément d'initiation de déformation (4).

**26.** Procédé selon la Revendication 24 ou 25, **caractérisé par** la mesure des temps de propagation d'au moins une oscillation non réfléchie se propageant directement au point de mesure et une oscillation réfléchie, grâce à quoi la réflexion se produit à une extrémité de réflexion (17) de l'élément de déformation (3) située à distance du point de mesure (27).

**27.** Procédé selon l'une des Revendications 24 à 26, **caractérisé par**

la mesure du temps de propagation à une extrémité de mesure (5) de l'élément de déformation (3), située à l'opposé de l'extrémité de réflexion (17), par le capteur de déformation (6).

28. Procédé selon l'une des Revendications 24 à 27, **caractérisé en ce qu'**une onde sonore, en particulier longitudinale, est mesurée comme l'oscillation.

Fig.1

Fig.2

Fig.3

Fig.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 20203298

- US 5274328 A